# FASCICULE DE BREVET EUROPEEN

(11) **EP 3 166 893 B1**
(45) Date de publication et mention de la délivrance du brevet: **17.02.2021**
(21) Numéro de dépôt: 15745534.6
(22) Date de dépôt: 01.07.2015
(51) Int. Cl.: C03B 5/20, C03B 5/03, C03B 5/185, C03C 3/091, C03C 3/078, C03C 3/087, C03C 3/089, C03B 5/182

(54) **DISPOSITIF DE FUSION DU VERRE COMPRENANT UN FOUR, UN CANAL ET UN BARRAGE**
GLASSCHMELZVORRICHTUNG MIT EINEM OFEN, EINER LEITUNG UND EINER BARRIERE
GLASS MELTING DEVICE COMPRISING A FURNACE, A DUCT AND A BARRIER

(30) Priorité: 08.07.2014 FR 1456580
(43) Date de publication de la demande: 17.05.2017
(73) Titulaire: SAINT-GOBAIN ISOVER, 92400 Courbevoie (FR)
(72) Inventeur: CLATOT, Richard, F-60700 Fleurines (FR); MAUGENDRE, Stéphane, F-60460 Precy sur Oise (FR); SZALATA, François, F-60290 Laigneville (FR)
(74) Mandataire: Saint-Gobain Recherche
(86) Numéro de dépôt international: PCT/FR2015/051809
(87) Numéro de publication internationale: WO 2016/005681

(56) Documents cités:
- WO-A1-2004/052054
- WO-A1-2013/098504
- GB-A- 714 292
- US-A- 2 559 683

## Description

L'invention concerne un dispositif de fusion de verre comprenant un four électrique à voûte froide pour la préparation de verre fondu.

Le dispositif selon l'invention comprend un four électrique muni d'électrodes en contact avec la masse de matières vitrifiables, un canal reliant le four à un dispositif de transformation du verre fondu, et un barrage plongeant dans le verre empêchant la matière première non fondue et surnageante de passer par le canal et d'aller jusqu'au dispositif de transformation du verre. Dans ce type de dispositif, le barrage est habituellement placé dans le canal. Cependant, on s'est aperçu que le barrage pouvait retenir du verre figé pour le larguer ensuite de façon incontrôlée sous forme de particules solides dans le verre fondu. Un tel comportement est nuisible à la qualité du verre produit, notamment lorsque celui-ci doit alimenter des filières de fibrage. Pour pallier ce défaut, on a eu l'idée de placer le barrage non pas dans le canal, mais plus en amont, juste à la sortie du four. A cet endroit, le verre est plus chaud et est le siège de courants de convection, ces deux facteurs empêchant la formation de verre figé sur le barrage. La qualité du verre s'en trouve ainsi améliorée.

Le four utilisé dans le cadre de l'invention est un four dit à voûte froide permettant de fondre des matières vitrifiables par la chaleur dégagée par effet Joule à partir d'électrodes plongeant dans les matières vitrifiables. La composition solide de matières vitrifiables est apportée par le dessus et forme une couche supérieure, également appelée croûte, recouvrant complètement le bain de matières en fusion. Selon l'art antérieur, les matières fondues sont extraites par la sole ou latéralement par une gorge pour passer dans un canal de distribution alimentant des dispositifs de fibrage. Un fibrage peut avoir lieu en continu directement après la fusion des matières vitrifiables. Lorsqu'une gorge est utilisée entre le four et le canal de distribution, on observe l'usure rapide des réfractaires délimitant la gorge, en particulier la partie supérieure de celle-ci. En effet, malgré l'utilisation de systèmes de refroidissement permettant de limiter l'attaque des réfractaires par les matières fondues à haute température, ces réfractaires doivent généralement être remplacés plus rapidement que les autres éléments en réfractaire du four. Un tel remplacement nécessite en outre l'arrêt du four. De plus, une gorge est plus facilement sujette à la formation d'un bouchon lorsque le four est mis en mode veille pour maintenance ou en cas de coupure électrique. L'élimination du bouchon de verre solidifié est souvent impossible et nécessite souvent la destruction et reconstruction de la gorge.

Ce type de fabrication fonctionne généralement avec des tirées comprises entre 5 et 100 tonnes par jour. C'est le passage du verre dans les filières de fibrage qui limite la tirée. La transformation en fibres est donc l'étape déterminante du flux de verre au travers de tout le procédé (tirée). Ce type de four aux dimensions relativement modestes (surface interne de sole comprise entre 1 m² et 30 m²) est très flexible et peut être arrêté facilement à tout moment selon les circonstances. Il peut généralement fonctionner sans discontinuer entre 24 heures et 6 mois, voire plus.

Le US6314760 enseigne un four circulaire à électrodes et à sole conique alimentant un canal de distribution, le flux de verre entre le four et le canal passant par un tube en molybdène entouré d'une enveloppe parcourue par de l'eau de refroidissement.

Le US3912488 enseigne un four circulaire à électrodes et à sole conique comprenant un orifice d'extraction des matières fondues au niveau du sommet du cône de la sole, ledit orifice étant refroidi par une circulation d'eau.

Le WO2013098504 enseigne un procédé de fabrication de fibres minérales, le flux de matière vitrifiable fondue entre le four et le canal de distribution passant sous un barrage métallique réglable en hauteur comprenant une enveloppe refroidie par un courant de fluide de refroidissement. Le réglage de la hauteur du barrage permet d'influer sur la température du verre à fibrer pour l'amener dans la plage de viscosité souhaitée pour le fibrage. La hauteur du barrage ne régule que la température et pas le débit de verre.

Le US2002/0000101 enseigne un dispositif de fusion du verre comprenant un four circulaire muni d'une ouverture constituée par un tube en molybdène.

Le WO2004/052054 enseigne un four muni d'électrodes comprenant un barrage plongeant dans le verre et maintenu seulement par la voûte. Ce barrage n'est pas amovible.

Le US2559683 enseigne un barrage amovible placé dans un bassin d'affinage. Le barrage ne sert qu'à retenir de la matière première non fondue surnageante dans le four. Le bassin d'affinage est aussi profond que le four.

Le GB714292 enseigne un barrage séparant deux compartiments d'un four, un compartiment de fusion et un compartiment d'affinage. Le verre est chauffé de part et d'autre du barrage et le point chaud du verre se situe vis-à-vis de la face aval du barrage. Le barrage ne sert qu'à retenir de la matière première non fondue surnageante dans le four.

L'invention concerne en premier lieu un dispositif de fusion du verre comprenant un four muni d'électrodes en contact avec la masse de matières vitrifiables, ledit four comprenant une ouverture latérale reliée à un canal de distribution du verre fondu, un barrage amovible plongeant dans le verre dans le four, le barrage étant dans le four et en appui contre les parois latérales du four de part et d'autre de l'ouverture. Dans le canal, et déjà à partir de son passage sous le barrage, le verre est de préférence en écoulement piston, sans courant retour de convection. Le canal est suffisamment peu profond pour empêcher les courants de retour. Le barrage plonge suffisamment profondément dans le verre pour que le verre passé sous lui ne participe pas à un courant de retour vers le four.

Selon l'invention, le barrage est à proximité de l'ouverture, dans le four devant l'ouverture. Si l'on considère le plus grand cercle horizontal pouvant s'inscrire dans le four, hors barrage, et le plus en son aval, alors un plan vertical passant par la face amont du barrage touche ce cercle. Ce cercle est pris dans le plan horizontal passant par la plus haute côte de la sole du canal. Pour trouver le placement de ce cercle, on ne prend pas en compte le barrage, d'où l'expression « hors barrage ». Le barrage est dans le four et devant l'ouverture, en appuis contre les parois latérales du four de part et d'autre de l'ouverture. Le barrage est alors plus large que l'ouverture du four. Les réfractaires de part et d'autre de l'ouverture peuvent être qualifiés de « jambage » et constituent de bons appuis pour la face aval du barrage. Si la face amont du barrage n'est pas verticale mais un peu inclinée par rapport à la verticale, il suffit qu'il existe au moins un plan vertical passant par la face amont du barrage et touchant ce cercle précédemment défini pour que la condition sur la position du barrage selon l'invention soit remplie. Le barrage est dans le four et il est préférable qu'il soit en contact avec des parois latérales réfractaires, notamment les parois latérales du four ou celles du canal de façon à ce que le verre allant dans le canal soit obligé de passer sous le barrage et ne puisse pas passer par les côtés. Ceci évite avantageusement le passage dans le canal de matière première non fondue. Comme déjà dit, le barrage est dans le four.

Le positionnement du barrage selon l'invention est idéal pour éviter les dépôts de verre non fondu sur le barrage du fait de sa proximité avec les électrodes, ledit barrage étant en une zone plus chaude que dans le canal, et du fait qu'il est dans des mouvements de convection du verre fondu dans le four. L'utilisation du barrage amovible selon l'invention permet de fonctionner en mode stop & go, c'est-à-dire que l'on peut arrêter le dispositif et le redémarrer sans avoir à fracturer des réfractaires pour la remise en route. Le fait que le barrage soit dans la zone de fusion permet de développer une courroie de convection entre les électrodes et les parois du four, barrage inclus. Des modélisations ont prouvé qu'il n'y avait pas suffisamment de courroie de convection lorsque le barrage est trop loin dans le canal.

L'ouverture du four servant à la coulée du verre par le canal est latérale, ce qui signifie qu'elle se trouve dans une paroi latérale du four, ladite paroi étant généralement verticale.

Le barrage peut être en acier et refroidi par un fluide tel que de l'air ou de l'eau. Il peut aussi être en molybdène, en un alliage de métaux réfractaires, en céramique, en platine, en céramique ou réfractaire revêtue de platine, en alliage de métaux réfractaires revêtu de platine, en molybdène revêtu de platine, étant entendu qu'avec ces matériaux, il peut être non refroidi ou refroidi par un courant intérieur d'un fluide de refroidissement comme de l'air ou de l'eau.

Le barrage retient les matières premières non fondues surnageantes dans le four. Le barrage est amovible au moins verticalement. Sa faculté d'être mobile verticalement donne la possibilité d'ajuster sa hauteur. Généralement, on le fait plonger dans le verre d'une hauteur h1 à partir du dessous de la croûte de matières premières, h1 étant de préférence d'au moins 150 mm. La croûte de matière première a généralement une épaisseur comprise entre 80 et 350 mm. La hauteur h2 de verre sous le barrage est de préférence d'au moins 100 mm. De préférence, la hauteur de verre h2 sous le barrage est inférieure à la hauteur h1 du barrage en contact avec le verre fondu sous la croûte de matières premières. Cette position du barrage conduit à l'augmentation du temps de séjour du verre en fusion dans le four, ce qui est favorable à la réduction, voire la disparition des particules infondues mélangées au verre fondu. Le barrage est avantageusement amovible latéralement, ce qui facilite son décollement d'avec la paroi latérale du four contre laquelle il est en contact. Sa faculté d'être mobile latéralement permet son décollement de la paroi latérale du four. La position du barrage dans le four en appuis contre les parois latérales du four de part et d'autre de l'ouverture permet cette mobilité latérale. Vu du dessus, le four peut avoir une forme polygonale, notamment carrée ou rectangulaire, ou être circulaire. La sole du four peut être plate ou peut comprendre une surface inclinée. La surface inclinée de la sole permet d'entrainer la matière vitrifiable fondue vers le point le plus bas de la sole en début de fusion. En effet, il est avantageux de rassembler le faible volume de matière vitrifiable fondue au début du remplissage du four pour former un point chaud accumulant la chaleur. Cela permet d'aller plus vite en début de remplissage et en quelque sorte d'amorcer le fonctionnement du four. La surface inclinée peut-être celle d'un cône renversé dont le sommet est le point le plus bas de la sole du four. Il peut également s'agir d'un plan incliné dont l'intersection avec la paroi cylindrique du four constitue une ligne courbe, laquelle présente un point le plus bas de la sole. D'autres formes sont possibles. De préférence, les électrodes sont à proximité de l'endroit où sont introduites les matières premières. Ainsi, si celles-ci sont susceptibles d'être introduites successivement en plusieurs endroits, on prévoit avantageusement de pouvoir déplacer les électrodes afin de pouvoir leur faire suivre l'endroit d'introduction des matières premières.

L'intérieur du four est muni de réfractaires venant en contact avec les matières vitrifiables, tant au niveau de la sole que de la paroi latérale. La paroi latérale comprend généralement une enveloppe métallique extérieure en contact avec l'air ambiant. Cette enveloppe métallique comprend en général deux cloisons entre lesquelles circule un fluide de refroidissement comme de l'eau de refroidissement.

Des électrodes sont au contact des matières vitrifiables pour les chauffer par effet joule. Les électrodes peuvent arriver dans le verre au travers de la sole, ou plonger par le dessus. Ces électrodes comprennent généralement une partie en molybdène au contact des matières vitrifiables. Pour le cas d'électrodes plongeant dans le verre par le dessus, elles peuvent de plus comprendre une partie en acier non en contact avec le verre, au-dessus des matières vitrifiables, reliées à une tension électrique. L'introduction des électrodes par le dessus présente plusieurs avantages par rapport à la configuration selon laquelle les électrodes passeraient par la sole. Notamment, le passage par la sole nécessite la réalisation de blocs d'électrodes faisant le lien entre l'électrode et la sole, blocs particulièrement délicats à réaliser du fait que la sole est aussi refroidie par une enveloppe métallique. Le nombre d'électrodes est adapté en fonction de la taille et de la tirée du four.

Le four est équipé de moyens d'introduction des matières vitrifiables, ce qui inclut le calcin. Celles-ci sont généralement en poudre, voire en granulés, généralement jusqu'à un diamètre de 10 mm, ce qui signifie que plus de 90% du poids de la matière vitrifiable est composé de particules, les deux points les plus éloignés de chaque particule étant inférieur à 10 mm. Les matières vitrifiables sont réparties de façon homogène sur toute la surface interne du four pour former une croûte recouvrant les matières fondues. Comme moyen d'introduction des matières vitrifiables, on peut utiliser une enfourneuse alimentant le four par le dessus. Les matières vitrifiables sont projetées de façon uniforme sur toute la surface interne du four. Les matières vitrifiables non encore fondues forment une croûte en surface au-dessus des matières vitrifiables fondues. Cette croûte forme un écran thermique limitant les pertes thermiques par le dessus. Le four n'est généralement pas équipé de moyens d'agitation des matières vitrifiables (pas d'agitateur mécanique ni de brûleur immergé) sauf éventuellement du type bouillonneur.

La surface de verre dans le four en contact avec l'atmosphère du four, est généralement comprise entre 1 et 30 m². En fonctionnement, la profondeur de matières vitrifiables (fondues + non fondues) est généralement comprise entre 200 et 1000 mm, et de préférence entre 300 et 800 mm, voire entre 400 et 600 mm. La tirée en fonctionnement du dispositif peut généralement être comprise entre 5 et 100 tonnes par jour.

Le canal de distribution peut comprendre au moins un orifice en sa sole. Il peut en comprendre 2 ou 3 ou plus selon le nombre de dispositifs de transformation, notamment de fibrage, à alimenter simultanément. Le filet de matières vitrifiables fondues tombant au travers de cet orifice peut ensuite être orienté vers une machine de fibrage. Le flux de verre dans le canal est laminaire.

La transformation en fibres peut être réalisée par un dispositif dit de centrifugation interne. Le principe du procédé de centrifugation interne est bien connu en lui-même de l'homme du métier. Schématiquement, ce procédé consiste à introduire un filet de matière minérale fondue dans un centrifugeur, encore appelé assiette de fibrage, tournant à grande vitesse et percé à sa périphérie par un très grand nombre d'orifices par lesquels la matière fondue est projetée sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par un tapis perméable aux gaz. Ce procédé connu a fait l'objet de nombreux perfectionnements dont notamment ceux enseignés dans les demandes de brevet européen EP0189534, EP0519797 ou EP1087912.

Le dispositif selon l'invention est adapté à la fusion de tous types de verre.

Le dispositif selon l'invention peut notamment être utilisé pour fondre des verres pour fibres aux compositions décrites dans l'un ou l'autre des documents WO99/57073, WO99/56525, WO00/17117, WO2005/033032, WO2006/103376. La température de fibrage idéale dépend de la composition de la matière fondue.

Généralement, on cherche à ce que sa viscosité soit comprise entre 25 Pa.s et 120 Pa.s.

Ainsi, l'invention concerne également un procédé de préparation de verre comprenant la fusion de matières vitrifiables par le dispositif selon l'invention. Selon ce procédé, le canal du dispositif peut alimenter un dispositif de fibrage de laine de verre.

Le verre final peut avoir une composition (composition A) comprenant :
SiO₂ : 35 à 80% en poids,
Al₂O₃ : 0 à 30% en poids,
CaO+MgO : 5 à 35% en poids,
Na₂O+K₂O : 0 à 20% en poids,
étant entendu qu'en général,
SiO₂+Al₂O₃ est compris dans le domaine allant de 50 à 80% en poids et que Na₂O+K₂O+B₂O₃ est compris dans le domaine allant de 5 à 30% en poids.

Les matières vitrifiables introduites peuvent correspondre à la composition d'une laine de verre (composition B) et comprendre:
SiO₂ : 50 à 75% en poids
Al₂O₃ : 0 à 8% en poids
CaO+MgO : 5 à 20% en poids
Oxyde de fer : 0 à 3% en poids
Na₂O+K₂O : 12 à 20% en poids
B₂O₃ : 2 à 10% en poids .

Les matières vitrifiables introduites peuvent aussi correspondre à la composition d'une laine de verre laine de verre riche en alumine (composition C) et comprendre:
SiO₂ : 35 à 50% en poids
Al₂O₃ : 10 à 30% en poids
CaO+MgO : 12 à 35% en poids
Oxyde de fer : 2 à 10% en poids
Na₂O+K₂O : 0 à 20% en poids .

Le verre dans le four a généralement une température supérieure à 1200°C. Il a par ailleurs généralement une température inférieure à 1700°C. Si le verre a la composition d'une laine de verre riche en alumine comme il vient d'être donné (composition C), alors sa température dans le four est généralement comprise entre 1350 et 1700°C. Si le verre a la composition d'une laine de verre classique (composition B), alors sa température dans le four est généralement comprise entre 1200 et 1420°C. Dans le dispositif selon l'invention, la température la plus élevée pour le verre se situe dans le four et jamais après le barrage. Le point le plus chaud pour le verre est donc dans le four, vis-à-vis de la face amont du barrage. Le dispositif selon l'invention est en effet suffisamment efficace pour fondre le verre sans qu'il ne soit nécessaire de prévoir un compartiment d'affinage derrière le barrage.

La température est avantageusement suffisamment élevée pour que la viscosité η en poise du verre à 1 cm de la face amont du barrage soit telle que log₁₀ *η* < 2. Cette relativement forte température permet de fluidifier le verre, ce qui à son tour permet l'établissement d'un fort courant de convection en sortie de four. Ce fort courant combiné avec le positionnement de la face amont du barrage en plein courant de convection empêche la formation de verre figée sur la face amont du barrage, éliminant de ce fait le largage incontrôlé et non-souhaité de particules en cours de fabrication. Cette viscosité est considérée à une distance de 1 cm de la face amont du barrage vers l'intérieur du four, au milieu de la largeur du barrage et à mi-hauteur de la profondeur du barrage en contact avec le verre.

Plus la matière vitrifiable absorbe les IR, plus les transferts thermiques sont limités et plus on observe un gradient thermique important de la sole à la croûte de matières premières surnageant au-dessus de la matière vitrifiable en fusion. Jusqu'à 3% en poids d'oxyde de fer, on considère que le verre absorbe peu les infra-rouges et la température du verre est sensiblement homogène dans le four. L'invention est particulièrement adaptée à la fusion de ce type de verre à faible teneur en oxyde de fer. Dans ce cas, la température du verre dans le four est généralement comprise entre 1200 et 1400°C.

Le canal de distribution peut alimenter notamment un dispositif de fibrage de laine de verre ou un dispositif de fabrication de verre creux comme des flacons ou bouteilles.
La figure 1 représente un dispositif selon l'invention vue de dessus.
La figure 2 représente le même dispositif que celui de la figure 1, vue de côté.
La figure 3 représente une comparaison de la distribution des températures selon que le barrage est dans le canal en a) ou dans le four en b).
La figure 4 représente un four selon le WO2013/098504 en perspective.

Les figures ne sont pas à l'échelle.

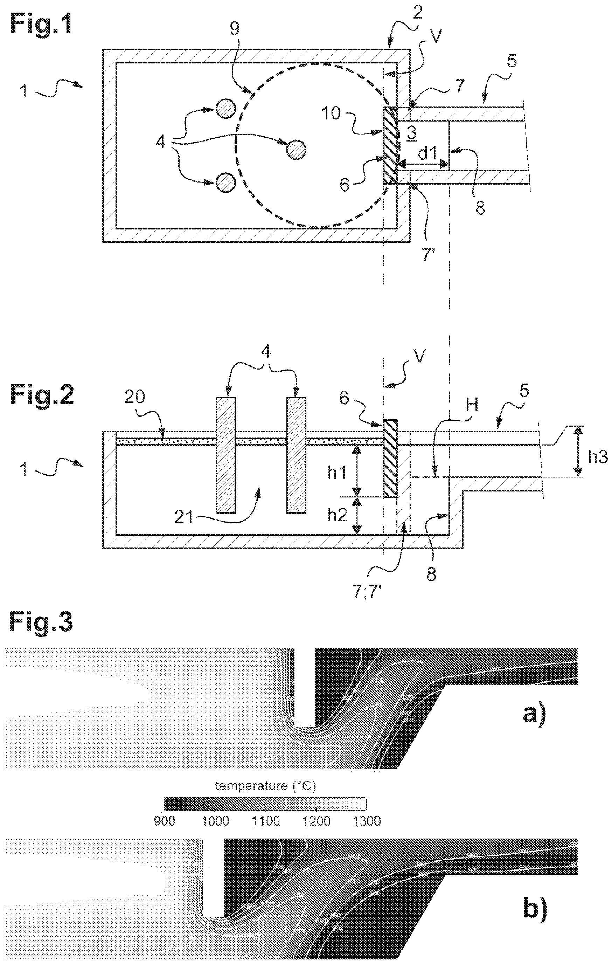

La figure 1 représente un dispositif selon l'invention vue de dessus. Il comprend un four 1 dont les parois latérales 2 forment un rectangle vu de dessus. Le four comprend une ouverture latérale 3. Des électrodes 4 en molybdène plongent dans les matières vitrifiables par le dessus pour chauffer celles-ci par effet Joule. Cette ouverture est reliée à un canal de distribution 5. Un barrage 6, placé dans le four 1, plonge dans le verre par le dessus. Ce barrage a une largeur plus grande que celle de l'ouverture et appuis sur les jambages 7 et 7' des parois. Une marche montante 8 en début de canal fait baisser la hauteur de verre quand on passe du four au canal. La marche est à une distance d1 derrière le barrage, d1 étant de préférence supérieure à 250 mm. Le plus grand cercle 9 le plus en aval du four et s'inscrivant dans le four vu de dessus, hors barrage, est représenté en pointillés. Ce cercle virtuel touche les parois latérales et les deux jambages de part et d'autre de l'ouverture, puisque pour le placement de ce cercle, on ne prend pas en compte le barrage. La face amont 10 du barrage est à l'intérieur du cercle 9. Le plan vertical V passant par la face amont 10 du barrage touche bien ce cercle 9 puisqu'il le coupe en deux endroits. Le barrage est dans le four et en appui sur les parois latérales du four de part et d'autre de l'ouverture 3.

La figure 2 représente le même dispositif que celui de la figure 1, vue de côté. Les références communes à celles de la figure 1 désignent les mêmes éléments ou caractéristiques. Dans le four 1, une croûte de matières premières 20 non encore fondues surnage au-dessus du niveau de verre 21. Le barrage plonge dans le verre d'une profondeur h1 à partir du dessous de la croûte de matières premières. La hauteur de verre sous le barrage est h2. La hauteur h3 de verre dans le canal est inférieure à la hauteur de verre fondu h1+h2 dans le four. Le cercle 9 de la figure 1 se trouve à hauteur de la plus haute côte de la sole du canal 5, c'est-à-dire dans le plan horizontal H de la figure 2.

La figure 3 représente une comparaison de la distribution des températures selon que le barrage est dans le canal en a) ou dans le four en b). Dans ces configuration a) et b), l'ouverture latérale du four se situe au niveau de la face aval du barrage positionné selon la figure 3b). On voit notamment que la face du barrage tournée vers le centre du four (vers la gauche sur les figures) est plus chaude en b) qu'en a). Pour ces mesures, on a utilisé un four de surface de verre de 2,5 m² fonctionnant avec une tirée de 6,2 tonnes par jour. Le verre comprenait 65,7% de SiO₂, 17,1% de Na₂O+K₂O, 4,5% de B₂O₃, 2,05% de Al₂O₃, 8% de CaO et 2,5% de MgO. La température de sole était 1350°C.

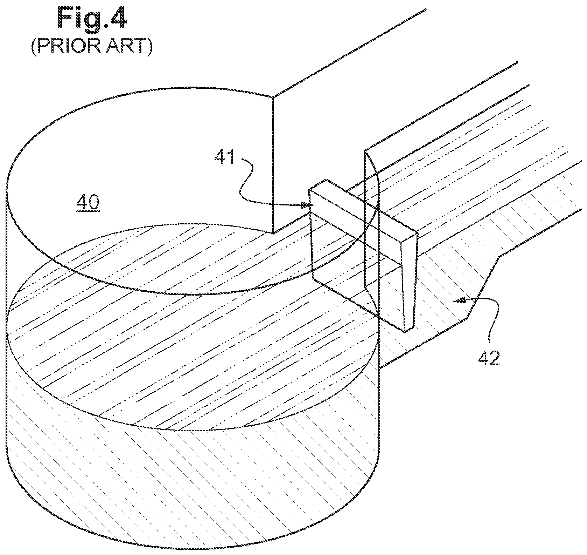

La figure 4 représente un four selon le WO2013/098504 en perspective. Seule la forme générale est représentée pour montrer la place du barrage. Le four 40 est circulaire et le barrage 41 amovible verticalement est situé dans le canal 42 de sorte que le plus grand cercle horizontal pouvant s'inscrire le plus en aval dans le four ne peut pas toucher le barrage. Ce plus grand cercle correspond d'ailleurs à la paroi interne circulaire du four. Selon cette disposition, le barrage est en zone assez froide et le barrage n'est pas amovible latéralement. En conséquence, il peut arriver que le barrage soit bloqué dans le canal et très difficile à dégager.

## Revendications

1. Dispositif de fusion du verre comprenant un four (1) muni d'électrodes (4) en contact avec la masse de matières vitrifiables, ledit four comprenant une ouverture latérale (3) reliée à un canal de distribution (5) du verre fondu (21), un barrage plongeant dans le verre devant l'ouverture (3) de sorte qu'un plan vertical (V) passant par la face amont du barrage (6) touche le plus grand cercle horizontal (9) pouvant s'inscrire le plus en aval dans le four hors barrage, ledit plus grand cercle étant à la hauteur de la plus haute côte (H) de la sole du canal, **caractérisé en ce que** le barrage (6) est amovible et est dans le four et en appui contre les parois latérales (7,7') du four de part et d'autre de l'ouverture (3).

2. Dispositif selon la revendication précédente, **caractérisé en ce que** le barrage (6) est plus large que l'ouverture latérale (3) du four.

3. Dispositif selon l'une des revendications précédente, **caractérisé en ce que** le barrage (6) est amovible verticalement.

4. Dispositif selon l'une des revendications précédente, **caractérisé en ce que** le barrage (6) est amovible latéralement.

5. Dispositif selon l'une des revendications précédente, **caractérisé en ce que** le barrage (6) est en contact avec des parois latérales (7,7') du four ou du canal obligeant le verre fondu à passer sous le barrage (6) sans pouvoir passer par les côtés du barrage.

6. Dispositif selon l'une des revendications précédente, **caractérisé en ce qu'**à partir de son passage sous le barrage (6), le verre est en écoulement piston.

7. Dispositif selon l'une des revendications précédente, **caractérisé en ce que** les électrodes plongent dans le verre (21) par le dessus.

8. Procédé de préparation de verre comprenant la fusion de matières vitrifiables par le dispositif de l'une des revendications précédentes.

9. Procédé selon la revendication précédente, **caractérisé en ce que** le canal (5) alimente un dispositif de fibrage de laine de verre.

10. Procédé selon l'une des revendications précédentes de procédé, **caractérisé en ce que** le verre comprend :
SiO₂ : 35 à 80% en poids,
Al₂O₃: 0 à 30% en poids,
CaO+MgO : 5 à 35% en poids,
Na₂O+K₂O : 0 à 20% en poids.

11. Procédé selon la revendication précédente, **caractérisé en ce que** SiO₂+Al₂O₃ est compris dans le domaine allant de 50 à 80% en poids et Na₂O+K₂O+B₂O₃ est compris dans le domaine allant de 5 à 30% en poids.

12. Procédé selon l'une des revendications précédentes de procédé, **caractérisé en ce que** le verre comprend les éléments suivants :
SiO₂ : 50 à 75% en poids
Al₂O₃ : 0 à 8% en poids
CaO+MgO : 5 à 20% en poids
Oxyde de fer : 0 à 3% en poids
Na₂O+K₂O : 12 à 20% en poids
B₂O₃ : 2 à 10% en poids .

13. Procédé selon la revendication 8, **caractérisé en ce que** le verre comprend les éléments suivants :
SiO₂ : 35 à 50% en poids
Al₂O₃ : 10 à 30% en poids
CaO+MgO : 12 à 35% en poids
Oxyde de fer : 2 à 10% en poids
Na₂O+K₂O : 0 à 20% en poids .

14. Procédé selon l'une des revendications précédentes de procédé, **caractérisé en ce que** la température du verre est suffisamment élevée pour que la viscosité η en poise du verre à 1 cm de la face amont du barrage soit telle que log₁₀ *η* < 2.

15. Procédé selon l'une des revendications précédentes de procédé, **caractérisé en ce que** la température du verre dans le four est comprise entre 1200 et 1700°C.

16. Procédé selon l'une des revendications précédentes de procédé, **caractérisé en ce que** la température la plus élevée du verre se situe dans le four, vis-à-vis de la face amont du barrage.

17. Procédé selon l'une des revendications précédentes de procédé, **caractérisé en ce que** la tirée est comprise entre 5 et 100 tonnes par jour,

18. Procédé selon l'une des revendications précédentes de procédé, **caractérisé en ce que** la hauteur de verre (h2) sous le barrage (6) est inférieure à la hauteur (h1) du barrage en contact avec le verre fondu sous la croûte (20) de matières premières.

## Patentansprüche

1. Glasschmelzvorrichtung, umfassend einen Ofen (1), der mit Elektroden (4) versehen ist, die mit der Masse verglasbarer Materialien in Kontakt sind, wobei der Ofen eine seitliche Öffnung (3) umfasst, die mit einer Verteilungsleitung (5) für das geschmolzene Glas (21) verbunden ist, wobei eine Barriere vor der Öffnung (3) so in das Glas eintaucht, dass eine vertikale Ebene (V), die durch die stromaufwärtige Fläche der Barriere (6) verläuft, den größten horizontalen Kreis (9) berührt, der sich am weitesten stromabwärts in den Ofen außerhalb der Barriere einfügen kann, wobei sich der größte Kreis auf der Höhe der höchsten Seite (H) des Leitungsbodens befindet, **dadurch gekennzeichnet, dass** die Barriere (6) herausnehmbar ist und sich im Ofen befindet und sich gegen die Seitenwände (7, 7') des Ofens auf beiden Seiten der Öffnung (3) abstützt.

2. Vorrichtung nach vorstehendem Anspruch, **dadurch gekennzeichnet, dass** die Barriere (6) breiter als die seitliche Öffnung (3) des Ofens ist.

3. Vorrichtung nach einem der vorstehenden Ansprüche, **dadurch gekennzeichnet, dass** die Barriere (6) vertikal herausnehmbar ist.

4. Vorrichtung nach einem der vorstehenden Ansprüche, **dadurch gekennzeichnet, dass** die Barriere (6) seitlich herausnehmbar ist.

5. Vorrichtung nach einem der vorstehenden Ansprüche, **dadurch gekennzeichnet, dass** die Barriere (6) mit Seitenwänden (7, 7') des Ofens oder der Leitung in Kontakt ist, so dass das geschmolzene Glas unter der Barriere (6) vorbeiströmen muss, ohne an den Seiten der Barriere vorbeiströmen zu können.

6. Vorrichtung nach einem der vorstehenden Ansprüche, **dadurch gekennzeichnet, dass** sich das Glas, sobald es unter der Barriere (6) vorbeigeströmt ist, in Pfropfenströmung befindet.

7. Vorrichtung nach einem der vorstehenden Ansprüche, **dadurch gekennzeichnet, dass** die Elektroden von oben in das Glas (21) eintauchen.

8. Verfahren zur Herstellung von Glas, umfassend das Schmelzen von verglasbaren Materialien durch die Vorrichtung nach einem der vorstehenden Ansprüche.

9. Verfahren nach vorstehendem Anspruch, **dadurch gekennzeichnet, dass** die Leitung (5) eine Vorrichtung zum Faserziehen von Glaswolle speist.

10. Verfahren nach einem der vorstehenden Verfahrensansprüche, **dadurch gekennzeichnet, dass** das Glas umfasst:
SiO₂: 35 bis 80 Gew.-%,
Al₂O₃: 0 bis 30 Gew.-%,
CaO+MgO: 5 bis 35 Gew.-%,
Na₂O+K₂O: 0 bis 20 Gew.-%.

11. Verfahren nach vorstehendem Anspruch, **dadurch gekennzeichnet, dass** SiO₂+Al₂O₃ im Bereich von 50 bis 80 Gew.-% und Na₂O+K₂O+B₂O₃ im Bereich von 5 bis 30 Gew.-% liegen.

12. Verfahren nach einem der vorstehenden Verfahrensansprüche, **dadurch gekennzeichnet, dass** das Glas folgende Elemente umfasst:
SiO₂: 50 bis 75 Gew.-%
Al₂O₃: 0 bis 8 Gew.-%
CaO+MgO: 5 bis 20 Gew.-%
Eisenoxid: 0 bis 3 Gew.-%
Na₂O+K₂O: 12 bis 20 Gew.-%
B₂O₃: 2 bis 10 Gew.-%.

13. Verfahren nach Anspruch 8, **dadurch gekennzeichnet, dass** das Glas die folgenden Elemente umfasst:
SiO₂: 35 bis 50 Gew.-%
Al₂O₃: 10 bis 30 Gew.-%
CaO+MgO: 12 bis 35 Gew.-%
Eisenoxid: 2 bis 10 Gew.-%
Na₂O+K₂O: 0 bis 20 Gew.-%.

14. Verfahren nach einem der vorstehenden Verfahrensansprüche, **dadurch gekennzeichnet, dass** die Temperatur des Glases hoch genug ist, um eine Poise-Viskosität η des Glases in 1 cm Abstand zur stromaufwärtigen Fläche der Barriere zu erreichen, so dass log₁₀ η < 2 ist.

15. Verfahren nach einem der vorstehenden Verfahrensansprüche, **dadurch gekennzeichnet, dass** die Temperatur des Glases im Ofen zwischen 1.200 und 1.700 °C liegt.

16. Verfahren nach einem der vorstehenden Verfahrensansprüche, **dadurch gekennzeichnet, dass** sich die höchste Temperatur des Glases im Ofen gegenüber der stromaufwärtigen Fläche der Barriere befindet.

17. Verfahren nach einem der vorstehenden Verfahrensansprüche, **dadurch gekennzeichnet, dass** die Entnahme zwischen 5 und 100 Tonnen pro Tag beträgt.

18. Verfahren nach einem der vorstehenden Verfahrensansprüche, **dadurch gekennzeichnet, dass** die Höhe des Glases (h2) unter der Barriere (6) geringer ist als die Höhe (h1) der Barriere in Kontakt mit dem geschmolzenen Glas unter der Kruste (20) der Rohstoffe.

## Claims

1. Device for melting glass comprising a furnace (1) equipped with electrodes (4) in contact with the mass of vitrifiable materials, the said furnace comprising a side opening (3) connected to a feeder channel (5) for the molten glass (21), a removable barrier (6) dipping into the glass in or before the opening (3) so that a vertical plane (V) passing through the upstream face of the barrier (6) touches the biggest horizontal circle (9) which can be inscribed the furthest downstream in the furnace, barrier excluded, the said biggest circle being at the height of the highest side (H) of the bottom of the channel, **characterized in that** the barrier (6) is removable and is in the furnace and is supported against the side walls (7, 7') of the furnace on either side of the opening (3)

2. Device according to the preceding claim, **characterized in that** the barrier (6) is wider than the side opening (3) of the furnace.

3. Device according to one of the preceding claims, **characterized in that** the barrier (6) is removable vertically.

4. Device according to one of the preceding claims, **characterized in that** the barrier (6) is removable laterally.

5. Device according to one of the preceding claims, **characterized in that** the barrier (6) is in contact with side walls (7, 7') of the furnace or of the channel, forcing the molten glass to pass under the barrier (6) without being able to pass through the sides of the barrier.

6. Device according to one of the preceding claims, **characterized in that**, from its passage under the barrier (6), the glass is in plug flow.

7. Device according to one of the preceding claims, **characterized in that** the electrodes are immersed in the glass (21) via the top.

8. Process for the preparation of glass, comprising the melting of vitrifiable materials by the device of one of the preceding claims.

9. Process according to the preceding claim, **characterized in that** the channel (5) feeds a glass wool fiberizing device.

10. Process according to one of the preceding process claims, **characterized in that** the glass comprises:
SiO₂: 35 to 80% by weight,
Al₂O₃: 0 to 30% by weight,
CaO+MgO: 5 to 35% by weight,
Na₂O+K₂O: 0 to 20% by weight.

11. Process according to the preceding claim, **characterized in that** SiO₂+Al₂O₃ is within the range extending from 50 to 80% by weight and Na₂O+K₂O+B₂O₃ is within the range extending from 5 to 30% by weight.

12. Process according to one of the preceding process claims, **characterized in that** the glass comprises the following components:
SiO₂: 50 to 75% by weight,
Al₂O₃: 0 to 8% by weight,
CaO+MgO: 5 to 20% by weight,
Iron oxide: 0 to 3% by weight,
Na₂O+K₂O: 12 to 20% by weight,
B₂O₃: 2 to 10% by weight.

13. Process according to Claim 10, **characterized in that** the glass comprises the following components:
SiO₂: 35 to 50% by weight,
Al₂O₃: 10 to 30% by weight,
CaO+MgO: 12 to 35% by weight,
Iron oxide: 2 to 10% by weight,
Na₂O+K₂O: 0 to 20% by weight.

14. Process according to one of the preceding process claims, **characterized in that** the temperature of the glass is sufficiently high for the viscosity η in poises of the glass at 1 cm from the upstream face of the barrier to be such that log₁₀ *η* < 2.

15. Process according to one of the preceding process claims, **characterized in that** the temperature of the glass in the furnace is between 1200 and 1700°C.

16. Process according to one of the preceding process claims, **characterized in that** the highest temperature of the glass is located in the furnace, opposite the upstream face of the barrier.

17. Process according to one of the preceding process claims, **characterized in that** the draw is between 5 and 100 tonnes per day.

18. Process according to one of the preceding process claims, **characterized in that** the height of glass (h2) under the barrier (6) is less than the height (h1) of the barrier in contact with the molten glass under the crust (20) of raw materials.
